Europäisches Patentamt

European Patent Office

Office européen des brevets

(11) Veröffentlichungsnummer: **0 435 054 A1**

# EUROPÄISCHE PATENTANMELDUNG

(21) Anmeldenummer: 90123710.7

(22) Anmeldetag: 10.12.90

(51) Int. Cl.5: **G11B 23/18**

(30) Priorität: 29.12.89 DE 3943271

(43) Veröffentlichungstag der Anmeldung:
03.07.91 Patentblatt 91/27

(84) Benannte Vertragsstaaten:
BE CH DE FR GB IT LI SE

(71) Anmelder: **ATIS ASSMANN GMBH**
Postfach 1144
W-6380 Bad Homburg(DE)

(72) Erfinder: **Junod, Alain**
**Rue de L'Oré e 6**
**CH-2000 Neuchâtel(CH)**
Erfinder: **Berchten, Niklaus**
**Grise Pierre 7**
**CH-2003 Neuchâtel(CH)**

(74) Vertreter: **Reichel, Wolfgang, Dipl.-Ing. et al**
**Reichel und Reichel Parkstrasse 13**
**W-6000 Frankfurt am Main 1(DE)**

(54) Verfahren und Schaltungsanordnung zum Aufzeichnen und zum Feststellen des Vorhandenseins und zur Wiedergabe von Informationssignalen.

(57) Eine Schaltungsanordnung 1 enthält eine Anzahl von Aufzeichnungsköpfen 6 zum Beschreiben von Aufzeichnungsspuren eines Aufzeichnungsträgers 8 beispielsweise eines Magnetbandes sowie eine Ansteuervorrichtung 2 für diese Aufzeichnungsköpfe. Das Band hat n-Aufzeichnungsspuren, die parallel zueinander verlaufen, und über Informationssignalkanäle C1 bis Cn wird ein Audio- bzw. Informationssignal wie Sprache, Musik den Aufzeichnungsköpfen über eine Aufzeichnungs-und Vormagnetisierungseinrichtung 7 zugeführt. Den Informationssignalen in den einzelnen Aufzeichnungsspuren wird jeweils ein Pilotsignal zugeführt, wobei die Pilotsignale untereinander eine Phasenverschiebung besitzen. Für das Lesen der Informationssignale in den Aufzeichnungsspuren ist ein einzelner Wiedergabekopf 9 vorhanden, der die Pilotsignale aller Aufzeichnungsspuren wiedergibt und diese aufsummiert.

Fig. 1

## VERFAHREN UND SCHALTUNGSANORDNUNG ZUM AUFZEICHNEN UND ZUM FESTSTELLEN DES VORHANDENSEINS UND ZUR WIEDERGABE VON INFORMATIONSSIGNALEN

Die Erfindung betrifft ein Verfahren zum Aufzeichnen und zum Feststellen des Vorhandenseins und zur Wiedergabe von Informationssignalen, die in aufeinanderfolgenden parallelen Aufzeichnungsspuren auf einem Aufzeichnungsträger aufgezeichnet sind, bei dem in den einzelnen Aufzeichnungsspuren ein Pilotsignal hinzugefügt wird, sowie eine entsprechende Schaltungsanordnung.

Bei bekannten Aufzeichnungs-/Wiedergabegeräten wie beispielsweise Magnetbandgeräten, bei denen die Information auf mehreren Aufzeichnungsspuren aufgezeichnet wird, sind pro Aufzeichnungsspur jeweils ein Aufnahme- und ein Wiedergabekopf vorhanden, so daß der bauliche Aufwand verhältnismäßig groß ist. Es sind auch Geräte bekannt, bei denen ein kombinierter Aufnahme-/Wiedergabekopf anstelle zweier Köpfe eingesetzt wird, da durch die Verwendung der üblichen Standardbandkassetten keine Möglichkeit besteht, neben dem Aufnahmekopf noch einen zusätzlichen Wiedergabekopf anzubringen.

Ein Wiedergabekopf für mehrere Aufzeichnungsspuren ist im allgemeinen teuerer als ein kombinierter Aufnahme-/Wiedergabekopf für eine einzelne Spur.

Aus der DE-C 29 07 149 ist eine Schaltungsanordnung zur Wiedergabe von Informationssignalen bekannt, welche in aufeinanderfolgenden parallelen Spuren auf einem Aufzeichnungsträger aufgezeichnet sind, die alle außerdem jeweils ein Positionssignal an einer bestimmten Stelle aufweisen. Die Schaltungsanordnung umfaßt einen Wandler, der längs der jeweiligen Spur derart bewegbar ist, daß er die in der betreffenden Spur aufgezeichneten Informations- und Positionssignale wiedergibt und eine Wandler-Auslenkeinrichtung, die den Wandler trägt und die auf die Aufnahme eines Antriebssignals von einer Steuerschaltung hin derart betrieben wird, daß der Wandler in einer Richtung quer, bezogen auf die Längsrichtung der jeweiligen Spur, ausgelenkt wird. In der Schaltungsanordnung ist desweiteren ein Detektor vorgesehen, der einen Zeitbasisfehler des aus der jeweiligen Spur wiedergegebenen Positionssignals ermittelt. Die Steuerschaltung, die das Antriebssignal abgibt, weist Elemente auf, die das Antriebssignal in Übereinstimmung mit dem ermittelten Zeitbasisfehler derart verändern, daß die Auslenkung des Wandlers in der genannten Querrichtung oder zumindest in Übereinstimmung mit dem ermittelten Zeitbasisfehler gesteuert ist.

Aufgabe der Erfindung ist es, das eingangs erwähnte Verfahren so weiterzuentwickeln, daß eine Überwachung mehrerer Aufzeichnungsspuren auf das Vorhandensein von aufgezeichneten Informationssignalen, bei Verwendung einer Standardbandkassette, mit einem einzelnen Wiedergabekopf für die Mehrspuraufzeichnung ermöglicht wird.

Diese Aufgabe wird erfindungsgemäß durch ein Verfahren gelöst, bei dem ein Zeittaktsignal einer Referenzspur dauernd und ein Pilotsignal gleich dem Zeittaktsignal einer Aufzeichnungsspur, jeweils nacheinander in zeitlich definierten Abständen aufsummiert werden und bei dem alle Aufzeichnungsspuren durch einen einzigen Wiedergabekopf gleichzeitig abgehört werden, wobei die Pilotsignale der einzelnen Aufzeichnungsspuren zu Pilotsummensignalen summiert werden und der Pegel der jeweils abgetasteten Pilotsummensignale das Vorhandensein oder Fehlen von Informationssignalen auf der einzelnen bzw. auf den entsprechenden Aufzeichnungsspuren anzeigt.

In Ausgestaltung des Verfahrens wird das Pilotsignal, das jeweils nacheinander, den Aufzeichnungsspuren aufsummiert wird, von einer Aufzeichnungsspur zur nachfolgenden Aufzeichnungsspur einer Phasenverschiebung von $1^*360°/n$ bis $n^*360°/n$ unterworfen, mit $n$ gleich einer ganzen Zahl, die gleich/größer 3 ist.

Die weitere Ausgestaltung des Verfahrens ergibt sich aus den Merkmalen der Ansprüche 3 bis 5.

Die Schaltungsanordnung zum Aufzeichnen und zum Feststellen des Vorhandenseins und zur Wiedergabe von Informationssignalen, die in aufeinanderfolgenden parallelen Aufzeichnungsspuren auf einem Aufzeichnungsträger aufgezeichnet sind, mit einer Ansteuervorrichtung für die Aufzeichnungsköpfe und einem Wiedergabekopf zeichnet sich dadurch aus, daß die Ansteuervorrichtung einen Wählschalter und einen Phasenschalter umfaßt, daß der Wählschalter die einzelnen Aufzeichnungsköpfe auswählt, die Pilotsignale aufzeichnen. denen der Phasenschalter eine Phasenverschiebung untereinander erteilt, daß über einen Zeittakt-Signalkanal TC der erste Aufzeichnungskopf dauernd ein Zeittaktsignal aufzeichnet, daß den übrigen Aufzeichnungsköpfen über Informationssignalkanäle Audiosignale zusammen mit den Pilotsignalen über eine Aufzeichnungs- und Vormagnetisierungseinrichtung zugeleitet werden, daß der einzige Wiedergabekopf die aufsummierten Pilotsignale der einzelnen Aufzeichnungsspuren über einen Verstärker, ein Bandpaßfilter, einem Empfänger zuleitet, dessen Ausgang mit einem Detektor verbunden ist. Die Weiterbildung der Schaltungsanordnung ergibt sich aus den Merkmalen der Patentansprüche 7 bis 10.

Die Erfindung wird im folgenden anhand eines in den Zeichnungen dargestellten Ausführungsbeispiels näher beschrieben.

Es zeigen:

Fig. 1 ein Blockschaltbild einer Schaltungsanordnung nach der Erfindung zum Feststellen des Vorhandenseins von Aufzeichnungen auf mehreren Spuren,

Fig. 2 ein Diagramm, das die Pilotsignale in einer ersten und einer weiteren Aufzeichnungsspur darstellt, sowie die Lage der Achse des Wiedergabekopfes der Schaltungsanordnung nach Figur 1 für das Pilotsignal und

Fig. 3 ein Diagramm, das schematisch die Phasenverschiebung der Pilotsignale untereinander in den einzelnen Aufzeichnungsspuren wiedergibt.

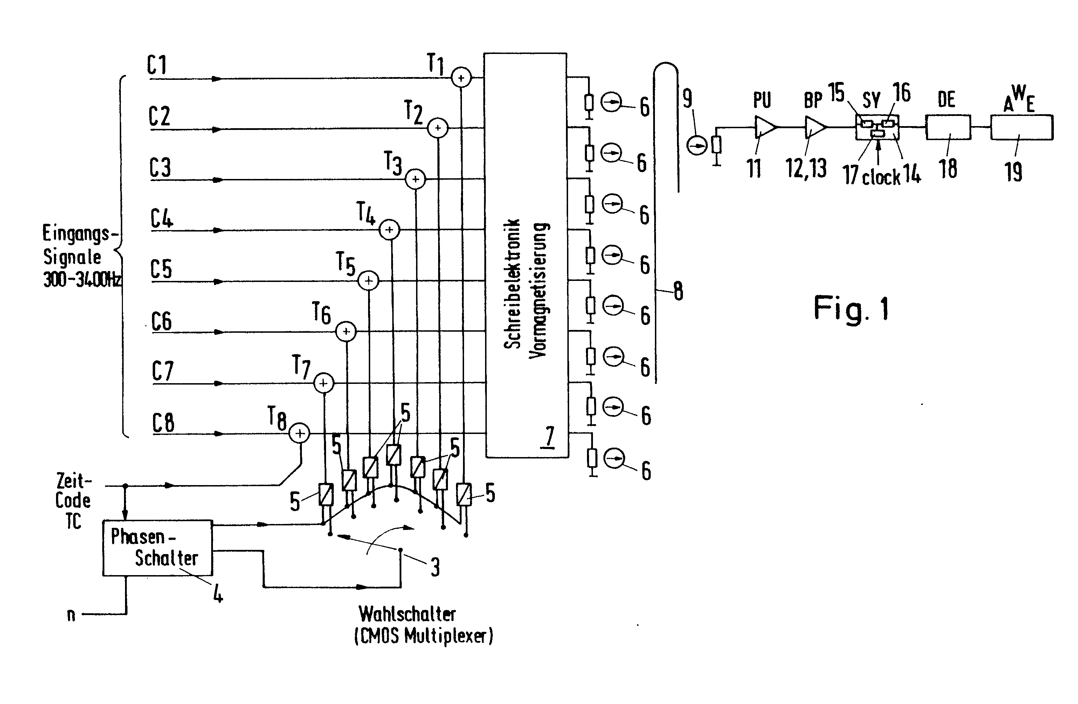

Das Blockschaltbild der in Fig. 1 dargestellten Schaltungsanordnung 1 enthält eine Anzahl von Aufzeichnungsköpfen 6 zum Beschreiben von parallelen Aufzeichnungsspuren eines Aufzeichnungsträgers 8, beispielsweise eines Magnetbandgeräts sowie eine Ansteuervorrichtung 2 für diese Aufzeichnungsköpfe. Der Aufzeichnungsträger 8 weist beispielsweise n-Aufzeichnungsspuren auf, und dementsprechend wird ein Audio- oder Tonfrequenzsignal wie Sprache, Musik oder der gleichen über Informationssignalkanäle C1 bis Cn den Aufzeichnungsköpfen 6 zugeführt. In Fig. 1 sind acht derartige Informationssignalkanäle, nämlich von C1 bis C8, dargestellt. Die Ansteuervorrichtung 2 umfaßt einen Wählschalter 3 und einen Phasenschalter 4. Der Wählschalter 3 ist einzeln mit den Schaltersignaleingängen K von ODER/OFF Schaltungen 5 verbunden. Der zweite Eingang dieser ODER/OFF Schaltungen ist ein Pilotsignaleingang S. Jeder der Pilotsignaleingänge S der ODER/OFF Schaltung 5 ist mit dem Ausgang des Phasenschalters 4 in Verbindung. Der Wählschalter 3 wählt die einzelne Aufzeichnungsspur aus, auf der das phasenverschobene Pilotsignal aufsummiert wird. Die Ausgänge der Schaltungen 5 und die entsprechenden Informationssignalkanäle C1 bis C8 sind in entsprechenden Signaladdierern T1 bis T8 zusammengeschaltet. Der Wählschalter 3 empfängt ein entsprechendes Wählsignal, das festlegt, welchem der einzelnen Aufzeichnungsköpfe 6 ein Pilotsignal zugeführt wird. Der erste bzw. der unterste Aufzeichnungskopf 6 in Figur 1 empfängt dauernd ein Zeittaktsignal über einen Zeittaktsignalkanal TC. Die unterschiedlichen Pilotsignale stimmen frequenzmäßig und amplitudenmäßig mit dem Zeittaktsignal überein, werden jedoch durch den Phasenschalter 4 einer Phasenverschiebung 360$^\circ$/n untereinander unterzogen, so daß die Phasen der den einzelnen Aufzeichnungsköpfen zugeführten Pilotsignale, wenn n = 4 gewählt wird, jeweils um 90$^\circ$ zueinander verschoben sind. Bei n handelt es sich stets um eine ganze Zahl, größer/gleich 3.

Die Ausgangssignale der Signaladdierer T1 bis T8 werden über eine Aufzeichnungs- und Vormagnetisierungseinrichtung 7 den einzelnen Aufzeichnungsköpfen 6 zugeleitet.

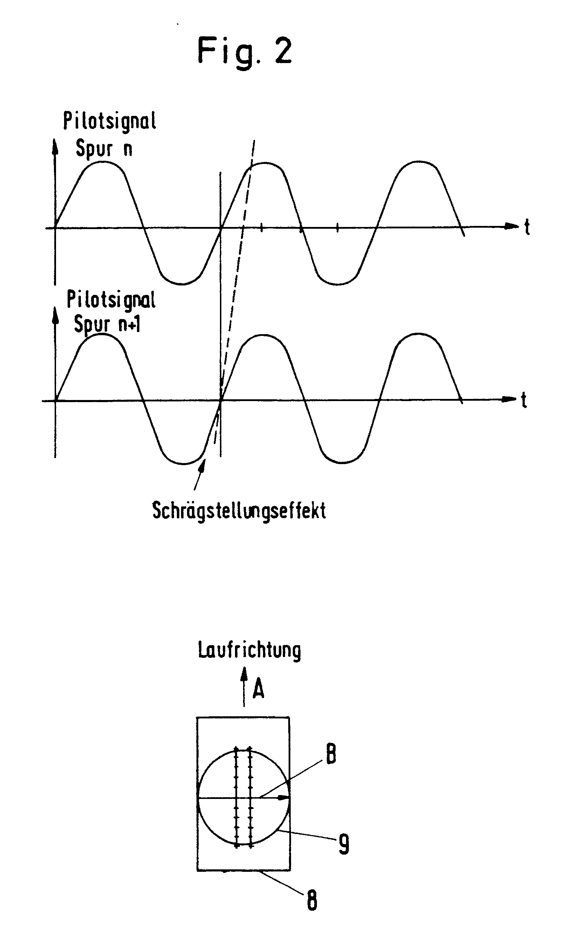

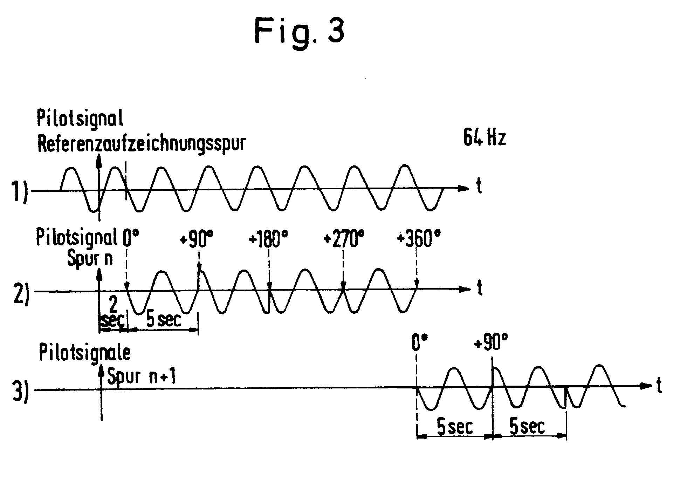

Die Schaltungsanordnung 1 enthält des weiteren den einzigen Wiedergabekopf 9, der die Pilotsignale aller Aufzeichnungs spuren wiedergibt bzw. liest und dabei aufsummiert. Die aufsummierten Pilotsignale der einzelnen Aufzeichnungsspuren gelangen über einen Verstärker 11, mehrere Bandpaßfilter 12, 13 an einen Empfänger 14, dessen Ausgang mit einem Detektor 18 verbunden ist. Die Aufnahme der einzelnen Aufzeichnungsspuren mit ihren entsprechenden Pilotsignalen wird später noch anahnd der Diagramme in den Figuren 2 und 3 näher erläutert werden.

Den Wiedergabekopf 9 umgibt eine Abschirmung 10, die das Einwirken von Störsignalen auf den Wiedergabekopf vermindert. Der Wiedergabekopf 9 ist über eine abgeschirmte Leitung mit dem Verstärker 11 verbunden, der die aufsummierten Pilotsignale mehr oder minder frequenzunabhängig verstärkt. Die Bandpaßfilter 12, 13 sind mit dem Emfpänger 14 verbunden, der einen Zähler 16 und ein schmalbandiges Pilotfrequenzfilter 15 umfaßt. Das Frequenzband des Pilotfrequenzfilters 15 hat beispielsweise eine Mittenfrequenz von 64 HZ. Der Zähler 16 wird von einem Taktgeber 17 gesteuert und liefert eine Steuerfrequenz an das Pilotfrequenzfilter 15.

Die Bandpaßfilter 12, 13 sind auf die Frequenz der Pilotsignale eingestellt. Diese Frequenz liegt außerhalb des Sprachbandes, das einen Frequenzbereich von 3000 bis 3400 Hz abdeckt. Beispielsweise beträgt die Frequenz der Pilotsignale 64 Hz.

Wie schon zuvor erwähnt wurde, ist die Ziffer n bei der Phasenverschiebung der Pilotsignale bevorzugt gleich 4, so daß die einzelnen Pilotsignale in den nebeneinanderliegenden Aufzeichnungsspuren jeweils um 90$^\circ$, 180$^\circ$, 270$^\circ$ und 360$^\circ$ bezüglich des Zeittaktsignals auf der ersten Aufzeichnungsspur phasenverschoben sind. Werden die phasenverschobenen Pilotsignale mit dem Zeittaktsignal, das über den Zeittakt-Signalkanal TC eingespeist wird, addiert, so kann unter diesen vier Werten jeweils ein Maximum, Minimum und ein Mittelwert des Additions- bzw. Mischsignals gemessen werden. Das Maximum $A_{max}$, das Minimum $A_{min}$ und der Mittelwert A des Mischsignals erfüllen die Beziehung

$$(A_{max} - A_{min}) \, A \, K,$$

wenn auf der einzelnen Aufzeichnungsspur Informationssignale aufgezeichnet sind, wobei K eine systemabhängige Konstante ist, die beispielsweise bei der vorliegenden Schaltungsanordnung etwa 0,30 beträgt.

Das Diagramm in Figur 2 zeigt die Pilotsignale in einer ersten und einer weiteren Aufzeichnungsspur mit der Annahme, daß die beiden Pilotsignale zunächst nicht zueinander phasenverschoben sind. Im Idealfall, wenn der Spalt, angedeutet durch den Pfeil B, in Figur 2 des Wiedergabekopfes 9 genau senkrecht zur Laufrichtung A des Aufzeichnungsträgers steht, wird die gemessene Amplitude das Zweifache des Pilotsignals der jeweiligen Aufzeichnungsspur sein. Wenn der Spalt des Wiedergabekopfes jedoch nicht genau senkrecht auf die Laufrichtung A steht, wie dies durch die schräge, gestrichelte Linie in Figur 2 angedeutet ist, wird die gemessene Amplitude der Pilotsignale sich auf einen Summenwert zwischen dem doppelten Wert und dem Wert 0 einstellen, je nachdem, was die Addition der Positionssignale zum jeweiligen Zeitpunkt ergibt. Um die Detektion der aufgezeichneten Pilotsignale auf jeden Fall zu gewährleisten, wird die voranstehend beschriebene Phasenverschiebung des Pilotsignals auf der zweiten Aufzeichnungsspur gegenüber der ersten Aufzeichnungsspur vorgenommen, so daß die gemessene Amplitude zumindest in einem Teilabschnitt einen Wert besitzt, der sich von dem einfachen Amplitudenwert der Referenzspur unterscheidet. Diese Phasenverschiebung in den Pilotsignalen der einzelnen Aufzeichnungsspuren wird anhand des Diagramms der Figur 3 für n = 4 näher erläutert.

Im oberen Bild des Diagramms der Figur 3 ist beispielsweise das Pilotsignal der Referenzaufzeichnungsspur schematisch dargestellt. Wird das mittlere Bild betrachtet, so zeigt sich, daß beispielsweise nach einem Zeitabschnitt von beispielsweise zwei Sekunden der Beginn der Zählung festgelegt wird und daß nach einem weiteren Zeitabschnitt von fünf Sekunden das dann der Aufzeichnungsspur zugeführte Pilotsignal eine Phasenverschiebung von 90° besitzt. Nach einem weiteren Zeitabschnitt von fünf Sekunden wird ein weiteres Pilotsignal der gleichen Aufzeichnungsspur zugeführt, das gegenüber dem vorangegangenen Pilotsignal wieder eine Phasenverschiebung von 90° aufweist bzw. gegenüber dem ersten Pilotsignal eine Phasenverschiebung von 180° besitzt. Ein viertes Pilotsignal besitzt nach einem Zeitabschnitt von fünf Sekunden wieder eine Phasenverschiebung von 90° gegenüber dem vorangegangenen Pilotsignal oder von 270° gegenüber dem ersten Pilotsignal.

Durch die Phasenverschiebung der Pilotsignale untereinander ist sichergestellt, daß die Amplitude zumindest in einem Teilabschnitt einen Wert aufweist, der sich von dem einfachen Amplitudenwert des Pilotsignals unterscheidet. Je nachdem, welche weitere Aufzeichnungsspur mit dem Pilotsignal beaufschlagt ist, wird durch den Wiedergabekopf 9 die Summe zwischen dem ersten Pilotsignal und dem jeweils weiteren Pilotsignal auf der weiteren Aufzeichnungsspur gebildet.

Befindet sich auf einer Aufzeichnungsspur kein Informationssignal bzw. kein Audiosignal und dementsprechend auch kein Pilotsignal, so wird durch den Wiedergabekopf 9 nur der einfache Amplitudenwert des Pilotsignals wiedergegeben, und es kann daher anhand des gemessenen Amplitudenwertes geschlossen werden, auf welcher Aufzeichnungsspur das Audio- bzw. Informationssignal sowie das Pilotsignal ausgefallen sind.

Jetzt ist es noch erforderlich, die zeitliche Lage der Pilotsignale auf den einzelnen Aufzeichnungsspuren festzuhalten, um so die betroffene Aufzeichnungsspur identifizieren zu können. Die Feststellung der zeitlichen Lage der Pilotsignale auf den einzelnen Aufzeichnungsspuren erfolgt mit Hilfe des Wählschalters 3, dessen Wirkungsweise anhand von Figur 1 beschrieben wurde.

Das erfindungsgemäße Verfahren und die Schaltungsanordnung eignen sich insbesondere dazu, Standardbandkassetten für die Vielspurtechnik zu nutzen, da der Wiedergabekopf für die aufsummierten Pilotsignale mit kleinen Abmessungen ausgeführt werden kann und somit in die vorhandenen Öffnungen in der üblichen Standardbandkassette eingefügt werden kann. Gegenüber Aufzeichnungsgeräten mit mehreren Aufzeichnungsspuren, wobei für jede Aufzeichnungsspur eine eigene Wiedergabeelektronik und ein eigener Wiedergabekopf erforderlich sind, ergibt sich durch den Einsatz eines einzelnen Wiedergabekopfes nach der Erfindung eine erhebliche Kosteneinsparung.

**Ansprüche**

1. Verfahren zum Aufzeichnen und zum Feststellen des Vorhandenseins und zur Wiedergabe von Informationssignalen, die in aufeinanderfolgenden parallelen Aufzeichnungsspuren auf einem Aufzeichnungsträger aufgezeichnet sind, bei dem den einzelnen Aufzeichnungsspuren ein Pilotsignal hinzugefügt wird, **dadurch gekennzeichnet,** daß ein Zeittaktsignal einer Referenzspur dauernd und ein Pilotsignal gleich dem Zeittaktsignal einer Aufzeichnungsspur, jeweils nacheinander in zeitlich definierten Abständen, aufsummiert werden und daß alle Aufzeichnungsspuren durch einen einzelnen Wiedergabekopf gleichzeitig abgehört werden, wobei die Pilotsignale der einzelnen Aufzeichnungsspuren zu Pilotsummensignalen summiert werden und der Pegel der jeweils abgetasteten Pilotsummensignale das Vorhandensein oder Fehlen von Informationssignalen auf der einzelnen bzw. auf den entsprechenden Aufzeichnungsspuren anzeigt.

2. Verfahren nach Anspruch 1,
**dadurch gekennzeichnet,**
daß das Pilotsignal, das jeweils nacheinander, den Aufzeichnungsspuren aufsummiert wird, von einer Aufzeichnungsspur zur nachfolgenden Aufzeichnungsspur einer Phasenverschiebung von $1* 360°/n$ bis $n* 360°/n$ unterworfen wird, mit n gleich einer ganzen Zahl, die gleich/größer 3 ist.

3. Verfahren nach Anspruch 2,
**dadurch gekennzeichnet,**
daß n gleich 4 ist, daß die um $90°$, $180°$, $270°$ und $360°$ bezüglich des Zeittaktsignals auf der ersten Aufzeichnungsspur phasenverschobenen Pilotsignale mit dem Zeittaktsignal addiert werden und daß das Maximum, Minimum und der Mittelwert des Additions- bzw. Mischsignals gemessen werden.

4. Verfahren nach Anspruch 3,
**dadurch gekennzeichnet,**
daß die Pilotsignale und das Zeittaktsignal TC detektiert und aufsummiert werden.

5. Verfahren nach Anspruch 3,
**dadurch gekennzeichnet,**
daß das Maximum $A_{myx}$, das Minimum $A_{min}$ und der Mittelwert A des Mischsignals die Beziehung

$$(A_{max} - A_{min})/A \, K$$

erfüllen, wenn auf der einzelnen Aufzeichnungsspur Informationssignale aufgezeichnet sind, wobei K eine systemspezifische Konstante ist und insbesondere 0,30 beträgt.

6. Schaltungsanordnung zum Aufzeichnen und zum Feststellen des Vorhandenseins und zur Wiedergabe von Informationssignalen, die in aufeinanderfolgenden parallelen Aufzeichnungsspuren auf einem Aufzeichnungsträger aufgezeichnet sind, mit einer Ansteuervorrichtung für die Aufzeichnungsköpfe und einem Wiedergabekopf,
**dadurch gekennzeichnet,**
daß die Ansteuervorrichtung (2) einen Wählschalter (3) und einen Phasenschalter (4) umfaßt, daß der Wählschalter (3) die einzelnen Aufzeichnungsköpfe (6) auswählt, die Pilotsignale aufzeichnen, denen der Phasenschalter (4) eine Phasenverschiebung untereinander erteilt, daß über einen Zeittakt-Signalkanal TC der erste Aufzeichnungskopf (6) dauernd ein Zeittaktsignal aufzeichnet, daß den übrigen Aufzeichnungköpfen (6) über Informationssignalkanäle (C1 bis C8) Audiosignale zusammen mit den Pilotsignalen über eine Aufzeichnungs- und Vormagnetisierungseinrichtung (7) zugeleitet werden, daß der einzige Wiedergabekopf (9) die aufsummierten Pilotsignale der einzelnen Aufzeichnungsspuren über einen Verstärker (11), ein Bandpaßfilter (12) einem Empfänger (14) zuleitet, dessen Ausgang mit einem Detektor (18) verbunden ist.

7. Schaltungsanordnung nach Anspruch 6,
**dadurch gekennzeichnet,**
daß der Phasenschalter (4) den Pilotsignalen untereinander eine Phasenverschiebung von $360°/n$, mit n einer ganzen Zahl, die gleich/größer 3 ist, erteilt.

8. Schaltungsanordnung nach Anspruch 6,
**dadurch gekennzeichnet,**
daß der Wiedergabekopf (9), die Pilotsignale aller Aufzeichnungsspuren summiert und wiedergibt, daß der Verstärker (11) die Pilotsignale verstärkt und daß die Bandpaßfilter (12,13) ein Filter mit einer wählbaren Mittenfrequenz gleich der Frequenz der zueinander phasenverschiedenen Pilotsignale umfassen und daß ein schmalbandiges Pilotfrequenzfilter (15) vorhanden ist, das an die Pilotsignalfrequenz mit seinem Frequenzband angepaßt ist.

9. Schaltungsanordnung nach Anspruch 6,
**dadurch gekennzeichnet,**
daß der Empfänger (14) mit dem Ausgang der Bandpaßfilter (12/13) verbunden ist und einen Zähler (16) umfaßt.

10. Schaltungsanordnung nach Anspruch 9
**dadurch gekennzeichnet,**
daß der Detektor (18) die Pilotsignale detektiert, die eine Auswerteeinheit (19) auswertet.

Fig. 1

EP 0 435 054 A1

# Fig. 2

Pilotsignal
Spur n

t

Pilotsignal
Spur n+1

t

Schrägstellungseffekt

Laufrichtung

A

B

9

8

Fig. 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl⁵) |
|---|---|---|---|
| A | <u>GB - A - 2 145 555</u><br>(BRITISH BROADCASTING CORPO-<br>RATION)<br>     * Fig. 1-3; Zusammenfassung * <br>-- | 1,6 | G 11 B 23/18 |
| A | <u>GB - A - 2 165 686</u><br>(EZOURI FUAD AKKA)<br>     * Fig. 1-4; Zusammenfassung *<br>-- | 1,6 | |
| A | <u>DE - A1 - 2 622 059</u><br>(DIECKHOFF ROLF)<br>     * Fig. 1,2; Anspruch 1 *<br>---- | 1,6 | |
| | | | **RECHERCHIERTE SACHGEBIETE (Int Cl⁵)**<br><br>G 11 B 23/00<br>G 11 B  5/00<br>G 11 B 27/00<br>G 11 B 31/00<br>G 11 B 15/00<br>G 11 B 25/00<br>G 06 F  7/00 |

Der vorliegende Recherchenbericht wurde für alle Patentansprüche erstellt.

| Recherchenort | Abschlußdatum der Recherche | Prüfer |
|---|---|---|
| WIEN | 04-03-1991 | BERGER |